# EUROPÄISCHE PATENTSCHRIFT

(11) **EP 2 550 170 B1**
(45) Veröffentlichungstag und Bekanntmachung des Hinweises auf die Patenterteilung: **17.05.2017**
(21) Anmeldenummer: 11710703.7
(22) Anmeldetag: 21.03.2011
(51) Int. Cl.: B60K 6/12, F15B 1/22, F15B 1/24, F15B 1/033, F15B 1/14, F16H 61/433

(54) **HYDROSTATISCHES HYBRID-ANTRIEBSSYSTEM**
HYDROSTATIC HYBRID DRIVE SYSTEM
SYSTÈME D'ENTRAÎNEMENT HYBRIDE HYDROSTATIQUE

(30) Priorität: 22.03.2010 DE 102010012975
(43) Veröffentlichungstag der Anmeldung: 30.01.2013
(73) Patentinhaber: Hydac Technology GmbH, 66280 Sulzbach/Saar (DE)
(72) Erfinder: BAUER, Frank, 66646 Marpingen (DE); BALTES, Herbert, 66679 Losheim (DE); KLOFT, Peter, 56235 Ransbach-Baumbach (DE)
(74) Vertreter: Bartels, Martin Erich Arthur
(86) Internationale Anmeldenummer: PCT/EP2011/001375
(87) Internationale Veröffentlichungsnummer: WO 2011/116914

(56) Entgegenhaltungen:
- WO-A2-02/46621
- WO-A2-2007/122481
- DE-A1- 3 518 434
- DE-A1- 4 212 542
- US-A1- 2008 093 152
- US-A1- 2009 173 066
- US-B2- 7 107 767

## Beschreibung

Die Erfindung betrifft ein hydrostatisches Hybrid-Antriebssystem für Straßenfahrzeuge, mit einer mit dem Antriebsstrang des Fahrzeuges verbundenen oder verbindbaren Pumpen-Motor-Einheit, die mittels einer Steuereinheit in einem Pump- oder Motorbetrieb steuerbar ist und über eine erste, durch ein Schaltventil sperrbare Arbeitsleitung mit einem Hochdruck-Hydrospeicher und über eine zweite Arbeitsleitung mit einem Niederdruck-Hydrospeicher verbindbar ist, wobei Hochdruck-Hydrospeicher und Niederdruck-Hydrospeicher durch einen Doppelkolbenspeicher gebildet sind, bei dem in einem Speichergehäuse mit je einem Speicherkolben eine Hochdruckseite und eine Niederdruckseite gebildet sind, wobei die Fluidräume der Hochdruckseite und der Niederdruckseite von einem Gehäusemittelstück getrennt sind, durch das sich die für beide Speicherkolben gemeinsame Kolbenstange erstreckt.

Im Hinblick auf die Verknappung der Ressourcen und die zunehmende CO₂-Belastung der Umwelt kommen in der Fahrzeugtechnik zunehmend hybride Antriebssysteme zur Anwendung. Bei den derzeit im Einsatz befindlichen Systemen handelt es sich zumeist um elektromotorische Hybride, bei denen bei Bremsvorgängen gewonnene elektrische Energie gespeichert wird und aus der gespeicherten Energie Antriebsenergie wieder gewonnen wird, um das Fahrzeug für den Fahrbetrieb und insbesondere für Beschleunigungsvorgänge zu unterstützen. Dadurch eröffnet sich die Möglichkeit, für vergleichbare Fahrleistungen die Antriebsleistung des als Primärantrieb dienenden Verbrennungsmotors herab zu setzen. Ein derartiges "down sizing" führt nicht nur zu einer Verbrauchssenkung, sondern eröffnet auch die Möglichkeit, betreffende Fahrzeuge einer einer niedrigeren Leistungsklasse entsprechenden, günstigeren Schadstoffklasse zuzuordnen.

Wegen der hohen Energiedichte und des kompakten Aufbaues hydraulischer Systeme lassen sich diese Ziele auch durch ein hydraulisches Hybridsystem erreichen. Um zusätzliches Antriebsdrehmoment auch bei niedrigen Drehzahlen und von Nulldrehzahl ausgehend für Beschleunigungsvorgänge zur Verfügung zu stellen oder um bei Bremsvorgängen die Bremswirkung zu unterstützen, wird hierbei hydraulische Energie in einem Hydrospeicher mittels einer Pumpen-Motor-Einheit gespeichert, um bei Bedarf im Motorbetrieb der Pumpen-Motor-Einheit als Antriebsenergie genutzt zu werden. Ein derartiges hydrostatisches Antriebssystem mit Rückgewinnung von Bremsenergie ist in dem Dokument DE 601 18 987 T2 aufgezeigt.

Die gattungsgemäße WO 02/46621 A2 zeigt einen Notenergieablass für ein hydraulisches Speichersystem auf. An die Arbeitsleitungen einer Pumpe/Motor-Einheit ist ein Doppelkolbenspeicher angeschlossen. Dem Niederdruckspeicher des Doppelkolbenspeichers ist ein zweiter Niederdruckspeicher parallel geschaltet.

Aus der US 7 107 767 B2 geht ein Doppelkolbenspeicher hervor, bei dem in einem Gehäusemittelteil zwischen einer Hochdruckseite und einer Niederdruckseite ein Endlagendruckentlastungsventil vorgesehen ist. Ausgehend von diesem Stand der Technik liegt der Erfindung die Aufgabe zugrunde, ein hydrostatisches Hybrid-Antriebssystem zur Verfügung zu stellen, das sich durch ein für die vorgesehenen Einsatzzwecke besonders gutes Betriebsverhalten auszeichnet.

Erfindungsgemäß ist diese Aufgabe durch ein Antriebsystem gelöst, das die Merkmale des Patentanspruches 1 in seiner Gesamtheit aufweist.

Nach dem kennzeichnenden Teil des Anspruchs 1 besteht eine wesentliche Besonderheit der Erfindung darin, dass die Steuereinheit der Pumpen-Motor-Einheit mit Steuerfluid aus der ersten Arbeitsleitung über einen Leitungsanschluss versorgbar ist, der an der ersten Arbeitsleitung zwischen der Pumpen-Motor-Einheit und dem Schaltventil vorgesehen ist. Dadurch ist eine betriebssichere Versorgung der Steuereinheit mit einem für eine schnelle Reaktion der Steuerfunktionen der Steuereinheit erforderlichen Steuerdruck gewährleistet, unabhängig vom jeweiligen Betriebsmodus.

In besonders vorteilhafter Weise kann hierbei vorgesehen sein, dass zwischen erster und zweiter Arbeitsleitung ein Rückschlagventil angeordnet ist, das druckbetätigt gegen die erste Arbeitsleitung hin öffenbar ist, dass Leckfluid der Pumpen-Motor-Einheit zu der zweiten Arbeitsleitung zuführbar ist und dass das Leckfluid über eine Ladepumpe zu der zweiten Arbeitsleitung zuführbar ist. Dadurch lässt sich nicht nur die Leckage durch Pumpen zur zweiten Arbeitsleitung hin ausgleichen, sondern der Druckpegel lässt sich in der über ein Druckbegrenzungsventil abgesicherten Leitung auf einen in geeignetem Maße angehobenen Druckpegel einstellen, bei dem über das zwischen zweiter Arbeitsleitung und erster Arbeitsleitung angeordnete Rückschlagventil aus der ersten Arbeitsleitung die Versorgung der Steuereinheit mit Steuerdruck mit geeignetem Druckniveau sichergestellt ist, auch bei Betriebszuständen, bei denen das Schaltventil geschlossen ist.

Bei vorteilhaften Ausführungsbeispielen ist die Steuereinheit der Pumpen-Motor-Einheit mit gefiltertem Steuerfluid über ein Druckminderventil mit vorgeschaltetem Fluidfilter versorgbar, das an der ersten Arbeitsleitung angeschlossen ist.

Vorzugsweise ist die Pumpen-Motor-Einheit durch eine Axialkolbenmaschine gebildet, die durch Änderung des Schwenkwinkels über Nullwinkel hinaus zwischen Pumpen- und Motorbetrieb umsteuerbar ist.

Um die Druckdifferenz der Hochdruckseite des Doppelkolbenspeichers zwischen geladenem und entladenem Zustand zu verringern, ist vorzugsweise an der Gasseite der Hochdruckseite des Doppelkolbenspeichers ein N₂-Vorratsbehälter angeschlossen.

Da beim erfindungsgemäßen System der Niederdruckpegel dank der Benutzung des Doppelkolbenspeichers konstant ist, kann dieser Druck durch einen kleinen Hilfsspeicher eingestellt werden, der an der zweiten Arbeitsleitung angeschlossen ist und auch Kompressionsverluste kompensiert.

Nachstehend ist die Erfindung anhand eines in der Zeichnung dargestellten Ausführungsbeispiels im Einzelnen erläutert. Es zeigen:
- Fig. 1: eine stark vereinfachte Symboldarstellung lediglich der hydraulischen Schaltung eines Ausführungsbeispieles des erfindungsgemäßen Antriebssystems ohne periphere Komponenten wie Steuereinrichtungen und fahrzeugseitige mechanische Komponenten;
- Fig. 2: eine grafische Darstellung des Verlaufs von Speicherdrücken;
- Fig. 3 und 4: eine Draufsicht bzw. Vorderansicht eines Doppelkolbenspeichers des erfindungsgemäßen Systems; und
- Fig. 5: einen Schnitt entsprechend der Schnittlinie VI-VI von Fig. 4.

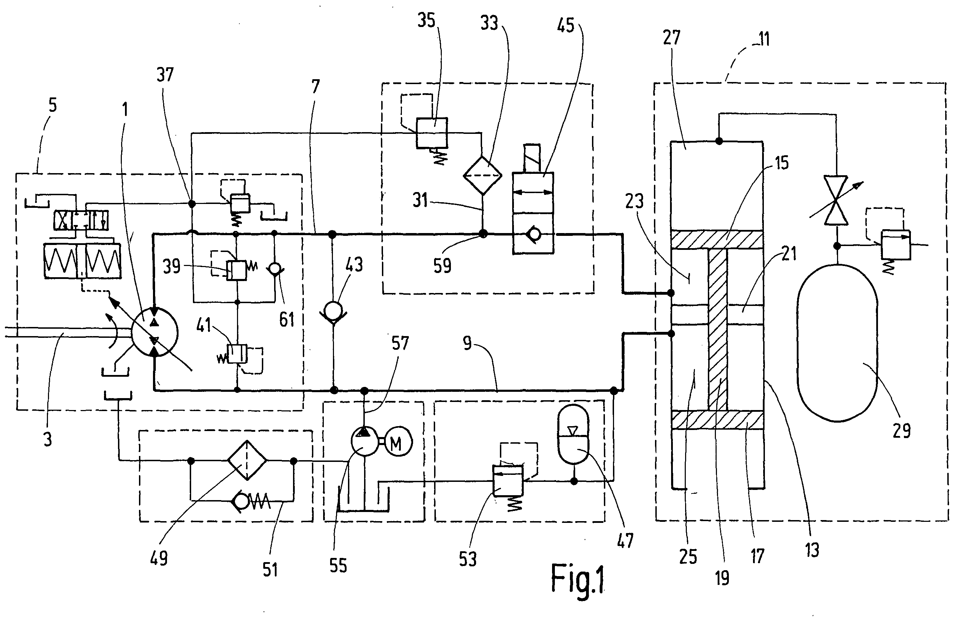

Die Fig. 1 zeigt die hydraulische Schaltung eines Ausführungsbeispieles, wobei eine Pumpen-Motor-Einheit mit 1 bezeichnet ist, die in gleichbleibendem Drehsinn von einem Verbrennungsmotor des betreffenden Fahrzeuges angetrieben ist, welcher, wie die übrigen Fahrzeugteile nicht dargestellt ist. Im vorliegenden Beispiel ist die Pumpen-Motor-Einheit 1 von der schematisch angedeuteten Kurbelwelle 3 des Verbrennungsmotors direkt angetrieben. Bei der Pumpen-Motor-Einheit 1 handelt es sich um eine Axialkolbenmaschine, deren Schwenkwinkel mittels einer elektrohydraulischen Steuereinheit 5 über eine neutrale Nullstellung hinaus in beide Schwenkrichtungen verstellbar ist, so dass die Pumpen-Motor-Einheit 1 bei gleichbleibendem Drehsinn im Pumpenbetrieb und im Motorbetrieb arbeiten kann. Die Steuereinheit 5 wirkt über eine nicht gezeigte Schnittstelle mit dem dem Stand der Technik entsprechenden elektronischen Motormanagement des Fahrzeuges zusammen.

An der Hochdruckseite der Pumpen-Motor-Einheit 1 ist eine erste Arbeitsleitung 7 angeschlossen, und an der Niederdruckseite der Pumpen-Motor-Einheit 1 ist eine zweite Arbeitsleitung 9 angeschlossen. Die erste Arbeitsleitung 7, als die Hochdruckleitung, und die zweite Arbeitsleitung 9, als die Niederdruckleitung, bilden zusammen mit einem Doppelkolbenspeicher 11 eine Art hydraulischer Wiege, in der Druckfluid zum Doppelkolbenspeicher 11 hin und vom Doppelkolbenspeicher 11 her förderbar ist. Der Doppelkolbenspeicher 11 erfüllt die Funktionen eines Hochdruckspeichers und eines Niederdruckspeichers. Zu diesem Zweck sind in einem gemeinsamen Speichergehäuse 13 ein Hochdruck-Speicherkolben 15 und ein Niederdruck-Speicherkolben 17 verschiebbar, die über eine gemeinsame Kolbenstange 19 fest miteinander verbunden sind. Die Kolbenstange 19 erstreckt sich durch ein Gehäusemittelteil 21, das einen Fluidraum 23 der Hochdruckseite von einem Fluidraum 25 der Niederdruckseite trennt. Für die Befüllung der Gasseite 27, die an den Hochdruck-Speicherkolben 15 angrenzt, mit Arbeitsgas, ist ein Vorratsbehälter 19 mit N₂-Gas an der Gasseite 27 angeschlossen.

Für die Versorgung der Steuereinheit 5 mit Steuerfluid ist eine Versorgungsleitung 31 an der ersten Arbeitsleitung 7 angeschlossen, um über ein Fluidfilter 33 und ein Druckbegrenzungsventil 35 gefiltertes Steuerfluid zu einem Versorgungsanschluss 37 zuzuführen, wobei der Steuerdruckpegel über Druckbegrenzungsventile 39 und 41 gegenüber der ersten Arbeitsleitung 7 bzw. der zweiten Arbeitsleitung 9 einstellbar ist. Zwischen diesen Arbeitsleitungen befindet sich ein Rückschlagventil 43, das druckbetätigt zur ersten Arbeitsleitung 7 hin öffenbar ist. Um eine Leckage der Pumpen-Motor-Einheit 1 zu verhindern, während sich bei Schwenkwinkel Null das System im Leerlauf befindet, ist die erste Arbeitsleitung 7 durch ein Schaltventil 45 sperrbar.

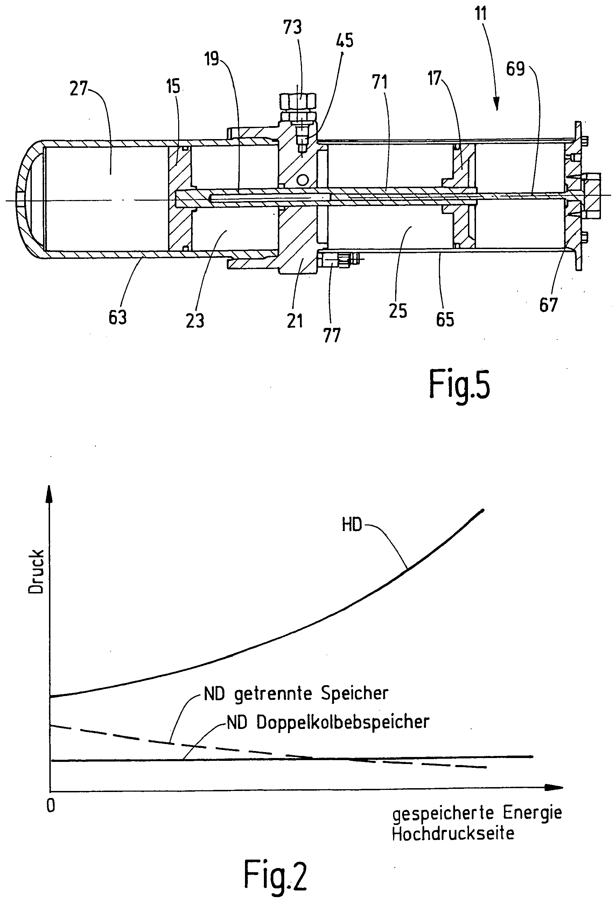

Beim Betrieb eines üblichen, derartigen Antriebssystemes, bei dem eine erste und eine zweite Arbeitsleitung mit gesonderten Hydrospeichern verbunden sind, die ihr eigenes Arbeitsgasvolumen enthalten, sinkt der Druckpegel des Niederdruckspeichers bei ansteigendem Druckpegel des Hochdruckspeichers, wodurch sich Schwierigkeiten für das Nachspeisen von Leckfluid der Pumpe in das System ergeben. Im Unterschied hierzu ist bei dem erfindungsgemäß vorgesehenen Doppelkolbenspeicher 11 die Summe der Fluidvolumina in Hochdruck-Fluidraum 23 und Niederdruck-Fluidraum 25 für sämtliche Kolbenstellungen immer gleich, so dass, dank der zusammen bewegbaren Speicherkolben 15 und 17, der Druckpegel in der zweiten Arbeitsleitung 9, d. h. der Niederdruckleitung, konstant bleibt. Die Fig. 2 zeigt die entsprechenden Druckverläufe über der gespeicherten Energie bei gesonderten Hydrospeichern und bei dem erfindungsgemäß vorgesehenen Doppelkolbenspeicher 11.

Bei konstantem Druckpegel in der zweiten Arbeitsleitung 9 kann das Druckniveau auf einen optimalen Wert mittels eines angeschlossenen, kleinen Hilfs-Hydrospeichers 47 eingestellt werden, der auch Kompressionsverluste kompensiert.

Bei dem Ausführungsbeispiel von Fig. 1 wird das Leckfluid der Pumpe 1 über ein Filter 49 mit einem Bypass 51 und über eine Ladepumpe 55 zur zweiten Arbeitsleitung 9 zugeführt. Da der Gehäusedruck der Pumpe 1 dem Druckpegel der zweiten Arbeitsleitung 9 entspricht, ist diese aus Sicherheitsgründen über einen Druckbegrenzungsventil 53 abgesichert.

Wenn als Pumpen-Motor-Einheit 1 eine Axialkolbenmaschine für geschlossenen Kreislauf benutzt wird, muss wegen dabei auftretender höherer Strömungsverluste mit einem erhöhten Niederdruckpegel gearbeitet werden. Da ein erhöhter Druckpegel als Gehäusedruck der Pumpe aber nicht zulässig ist, muss eine zusätzliche Leckleitung vorgesehen sein, um die Gehäusedichtung vor Überlastung zu schützen. Pumpen für geschlossenen Kreislauf erfordern auch eine Druckdifferenz zwischen Gehäuse und Niederdruckseite, um die Kolben an der Schwenkplatte zu halten. Im Hinblick hierauf ist bei dem Ausführungsbeispiel von Fig. 1 eine kleine, elektromotorisch angetriebene Ladepumpe 55 in einer gesonderten Leitung 57 angeordnet, um durch Pumpen zur zweiten Arbeitsleitung 9 hin die Leckage auszugleichen. Der Gehäusedruck ist nunmehr vom Niederdruckpegel entkoppelt.

Durch den erhöhten Niederdruckpegel in der zweiten Arbeitsleitung 9 eröffnet sich nunmehr die Möglichkeit, die Steuereinheit 5 mit Steuerfluid aus der zweiten Arbeitsleitung 9 zu versorgen, nämlich über das Rückschlagventil 43. Zu diesem Zweck ist das Druckbegrenzungsventil 35 beim zweiten Ausführungsbeispiel zwischen der Pumpeneinheit 1 und dem Schaltventil 45 bei 59 an der ersten Arbeitsleitung 7 angeschlossen, von der Steuerfluid über das geöffnete Schaltventil 45, den Filter 33 und das Druckbegrenzungsventil 35 zum Anschluss 37 zuführbar ist. Bei geschlossenem Rückschlagventil 43 steht nun ein erhöhter Steuerdruck für die Steuereinheit 5 zur Verfügung.

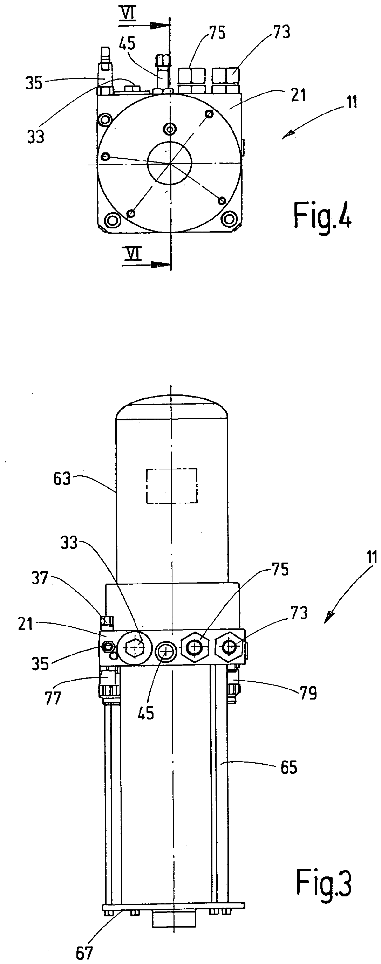

Die Fig. 3 bis 5 verdeutlichen eine praktische Ausführungsform des Doppelkolbenspeichers 11, dessen für beide Speicherkolben 15 und 17 gemeinsames Speichergehäuse 13 eine hochdruckseitige Gehäusehälfte 63 und eine niederdruckseitige Gehäusehälfte 65 aufweist, die durch ein Gehäusemittelteil 21 voneinander getrennt sind. Die die beiden Kolben 15 und 17 fest miteinander verbindende Kolbenstange 19 ist durch das Mittelteil 21 mit fluiddichter Abdichtung hindurchgeführt. Vom offenen Ende 67 der niederdruckseitigen Gehäusehälfte 65 erstreckt sich ein Wegaufnehmer 69 in eine Innenbohrung 71 der Kolbenstange 19, um für das System eine Anzeige der Kolbenstellung zu liefern.

Eine Besonderheit des Doppelkolbenspeichers 11 besteht auch darin, dass das Gehäusemittelteil 21 eine Art Ventilblock bildet, an dem und in dem sich sämtliche Leitungsanschlüsse und weitere Komponenten befinden. Beim gezeigten Beispiel handelt es sich hierbei um Anschlüsse 73 und 75 für eine erste Arbeitsleitung 7 bzw. eine zweite Arbeitsleitung 9. Des weiteren befinden sich im Gehäusemittelteil 21 das Schaltventil 45, das Filter 33 und das Druckbegrenzungsventil 35, der Steuerfluid-Anschluss 37 sowie Drucksensoren 77 und 79.

Ein zusätzlicher Vorteil gegenüber elektrischen Hybridsystemen besteht darin, dass sich das erfindungsgemäße System ohne Schwierigkeiten in existierende Fahrzeuge einbauen lässt, weil die Pumpen-Motor-Einheit 1 unmittelbar mit dem Antriebsstrang mechanisch koppelbar ist.

## Patentansprüche

1. Hydrostatisches Hybrid-Antriebssystem für Straßenfahrzeuge, mit einer mit dem Antriebsstrang des Fahrzeuges verbundenen oder verbindbaren Pumpen-Motor-Einheit (1), die mittels einer Steuereinheit (5) in einem Pump- oder Motorbetrieb steuerbar ist und über eine erste, durch ein Schaltventil (45) sperrbare Arbeitsleitung (7) mit einem Hochdruck-Hydrospeicher und über eine zweite Arbeitsleitung (9) mit einem Niederdruck-Hydrospeicher verbindbar ist, wobei Hochdruck-Hydrospeicher und Niederdruck-Hydrospeicher durch einen Doppelkolbenspeicher (11) gebildet sind, bei dem in einem Speichergehäuse (13) mit je einem Speicherkolben (15, 17) eine Hochdruckseite und eine Niederdruckseite gebildet sind, wobei die Fluidräume (23 und 25) der Hochdruckseite und der Niederdruckseite von einem Gehäusemittelstück (21) getrennt sind, durch das sich die für beide Speicherkolben (15, 17) gemeinsame Kolbenstange erstreckt, **dadurch gekennzeichnet, dass** die Steuereinheit (5) der Pumpen-Motor-Einheit (1) mit Steuerfluid aus der ersten Arbeitsleitung (7) über einen Leitungsanschluss (59) versorgbar ist, der an der ersten Arbeitsleitung (7) zwischen der Pumpen-Motor-Einheit (1) und dem Schaltventil (45) vorgesehen ist.

2. Antriebssystem nach Anspruch 1, **dadurch gekennzeichnet, dass** zwischen erster (7) und zweiter Arbeitsleitung (9) ein Rückschlagventil (43) angeordnet ist, das druckbetätigt gegen die erste Arbeitsleitung (7) hin öffenbar ist, dass Leckfluid der Pumpen-Motor-Einheit (1) zu der zweiten Arbeitsleitung (9) zuführbar ist und dass das Leckfluid über eine Ladepumpe (55) zu der zweiten Arbeitsleitung (9) zuführbar ist.

3. Antriebssystem nach Anspruch 1 oder 2, **dadurch gekennzeichnet, dass** die Steuereinheit (5) der Pumpen-Motor-Einheit (1) mit gefiltertem Steuerfluid über ein Druckminderventil (35) mit vorgeschaltetem Fluidfilter (33) versorgbar ist, das über den Leitungsanschluss (59) an der ersten Arbeitsleitung (7) angeschlossen ist.

4. Antriebssystem nach einem der vorstehenden Ansprüche, **dadurch gekennzeichnet, dass** die Pumpen-Motor-Einheit (1) durch eine Axialkolbenmaschine gebildet ist, die durch Änderung des Schwenkwinkels über Nullwinkel hinaus zwischen Pumpen- und Motorbetrieb umsteuerbar ist.

5. Antriebssystem nach einem der vorstehenden Ansprüche, **dadurch gekennzeichnet, dass** an der Gasseite (27) der Hochdruckseite des Doppelkolbenspeichers (11) ein N₂-Vorratsbehälter (29) angeschlossen ist.

6. Antriebssystem nach einem der vorstehenden Ansprüche, **dadurch gekennzeichnet, dass** an der zweiten Arbeitsleitung (9) ein Hilfs-Hydrospeicher (47) angeschlossen ist.

7. Antriebssystem nach einem der vorstehenden Ansprüche, **dadurch gekennzeichnet, dass** die zweite Arbeitsleitung (9) durch ein Druckbegrenzungsventil (53) abgesichert ist.

8. Antriebssystem nach einem der vorstehenden Ansprüche, **dadurch gekennzeichnet, dass** bei dem Doppelkolbenspeicher (11), in einem gemeinsamen Speichergehäuse (13) mit je einem Speicherkolben (15, 17) eine Hochdruckseite und eine Niederdruckseite gebildet sind, dass die Fluidräume (25, 27) der Hochdruckseite und der Niederdruckseite von einem Gehäusemittelstück (21) getrennt sind, durch das sich die für beide Speicherkolben (15, 17) gemeinsame Kolbenstange (19) erstreckt, und dass das Gehäusemittelstück (21) durch einen Ventilblock gebildet ist, der hydraulische Komponenten wie beispielsweise ein Schaltventil (45), ein Druckminderventil (35), Drucksensoren (77, 79) und/oder einen Fluidfilter (33) enthält.

## Claims

1. A hydrostatic hybrid drive system for road vehicles, comprising a pump/motor unit (1) which is or can be connected to the drive train of the vehicle, which can be controlled by means of a control unit (5) in a pump or motor mode, and can be connected to a high pressure hydraulic accumulator by means of a first working line (7) which can be closed by means of a control valve (45), and can be connected to a low pressure hydraulic accumulator by means of a second working line (9), the high pressure hydraulic accumulator and the low pressure hydraulic accumulator being formed by a double piston accumulator (11) in which a high pressure side and a low pressure side are formed in an accumulator housing (13), each of which has an accumulator piston (15, 17), the fluid chambers (23 and 25) of the high pressure side and the low pressure side being separated by a central housing part (21) through which the common piston rod for both accumulator pistons (15, 17) extends, **characterised in that** the control unit (5) of the pump/motor unit (1) can be supplied with control fluid from the first working line (7) by means of a line connection (59) which is provided on the first working line (7) between the pump/motor unit (1) and the control valve (45).

2. The drive system according to Claim 1, **characterised in that** a non-return valve (43) is disposed between the first (7) and the second working line (9), which non-return valve can be opened by pressure actuation in the direction of the first working line (7), that leakage fluid of the pump/motor unit (1) can be delivered to the second working line (9), and that the leakage fluid can be delivered to the second working line (9) by means of a charging pump (55).

3. The drive system according to Claim 1 or 2, **characterised in that** the control unit (5) of the pump/motor unit (1) can be supplied with filtered control fluid by means of a pressure reducing valve (35) that has an upstream fluid filter (33) that is connected to the first working line (7) by means of the line connection (59).

4. The drive system according to any of the preceding claims, **characterised in that** the pump/motor unit (1) is formed by an axial piston machine which can be reversed between pump mode and motor mode by changing the pivot angle beyond the zero angle.

5. The drive system according to any of the preceding claims, **characterised in that** an N₂ supply tank (29) is connected to the gas side (27) of the high pressure side of the double piston accumulator (11).

6. The drive system according to any of the preceding claims, **characterised in that** an auxiliary hydraulic accumulator (47) is connected to the second working line (9).

7. The drive system according to any of the preceding claims, **characterised in that** the second working line (9) is protected by a pressure limiting valve (53).

8. The drive system according to any of the preceding claims, **characterised in that** a high pressure side and a low pressure side having in each case an accumulator piston (15, 17) are formed in a common accumulator housing (13), that the fluid chambers (25, 27) of the high pressure side and low pressure side are separated by a central housing part (21) through which the common piston rod (19) for both accumulator pistons (15, 17) extends, and that the central housing part (21) is formed by a valve block which contains hydraulic components such as for example a control valve (45), a pressure reducing valve (35), pressure sensors (77, 79) and/or a fluid filter (33).

## Revendications

1. Système d'entraînement hybride hydrostatique pour des véhicules routiers, comprenant un groupe (1) motopompe relié à la chaîne d'entraînement du véhicule ou pouvant l'être, qui peut être commandé au moyen d'une unité (5) de commande, suivant un fonctionnement en pompe ou en moteur et qui, par l'intermédiaire d'un premier conduit (7) de travail pouvant être fermé par une vanne (45) pilote, peut être relié à un hydro-accumulateur de haute pression et, par l'intermédiaire de deuxième conduit (9) de travail, à un hydro-accumulateur de basse pression, l'hydroaccumulateur de haute pression et l'hydro-accumulateur de basse pression étant formé par un accumulateur (11) à deux pistons, dans lequel un côté haute pression et un côté basse pression sont formés dans une enveloppe (13) d'accumulateur par respectivement un piston (15, 17) d'accumulateur, les espaces (23 et 25) pour du fluide du côté haute pression et du côté basse pression étant séparés par une pièce (21) médiane de l'enveloppe, à travers laquelle passe la tige de piston commune aux deux pistons (15, 17) de l'accumulateur, **caractérisé en ce que** l'unité (5) de commande du groupe (1) motopompe peut être alimentée en du fluide de commande à partir du premier conduit (7) de travail, par l'intermédiaire d'un raccord (59) de conduit, qui est prévu sur le premier conduit (7) de travail entre le groupe (1) motopompe et la vanne (45) pilote.

2. Système d'entraînement suivant la revendication 1, **caractérisé en ce qu'**il est monté, entre la première (7) et la deuxième ligne (9) de travail, un clapet (43) antiretour, qui peut, en étant actionné par la pression, s'ouvrir vers le premier conduit (7) de travail, **en ce que** du fluide de fuite du groupe (1) motopompe peut être envoyé au deuxième conduit (9) de travail et **en ce que** le fluide de fuite peut être envoyé au deuxième conduit (9) de travail par l'intermédiaire d'une pompe (55) de charge.

3. Système d'entraînement suivant la revendication 1 ou 2, **caractérisé en ce que** l'unité (5) de commande du groupe (1) motopompe peut être alimentée par du fluide de commande filtré, par l'intermédiaire d'une vanne (35) de détente ayant un filtre (33) pour du fluide monté en amont et raccordée au premier conduit (7) de travail par le raccord (59) de conduit.

4. Système d'entraînement suivant l'une des revendications précédentes, **caractérisé en ce que** le groupe (1) motopompe est formé par une machine à piston axiale, qui peut passer entre un fonctionnement en pompe et un fonctionnement en moteur, par modification de l'angle de pivotement en passant par l'angle zéro.

5. Système d'entraînement suivant l'une des revendications précédentes, **caractérisé en ce qu'**un réservoir (29) de N₂ est raccordé au côté (27) gaz du côté haute pression de l'accumulateur (11) à deux pistons.

6. Système d'entraînement suivant l'une des revendications précédentes, **caractérisé en ce qu'**un hydro-accumulateur (47) auxiliaire est raccordé au deuxième conduit (9) de travail.

7. Système d'entraînement suivant l'une des revendications précédentes, **caractérisé en ce que** le deuxième conduit (9) de travail est sécurisé par une vanne (53) de limitation de la pression.

8. Système d'entraînement suivant l'une des revendications précédentes, **caractérisé en ce que**, dans l'accumulateur (11) à deux pistons, il est formé, dans une enveloppe (13) commune de l'accumulateur, par respectivement un piston (15, 17) de l'accumulateur, un côté haute pression et un côté basse pression, **en ce que** les espaces (25, 27) pour du fluide, du côté haute pression et du côté basse pression, sont séparés par une pièce (21) médiane de l'enveloppe, à travers laquelle passe la tige (19) de piston commune aux deux pistons (15, 17) de l'accumulateur et **en ce que** la pièce (21) médiane de l'enveloppe est formée par un bloc vanne, qui contient des composants hydrauliques, comme par exemple une vanne (45) pilote, une vanne (35) de détente, des sondes (77, 79) et/ou un filtre (33) pour du fluide.
